# FASCICULE DE BREVET EUROPEEN

(11) **EP 2 883 723 B1**
(45) Date de publication et mention de la délivrance du brevet: **11.07.2018**
(21) Numéro de dépôt: 14197159.8
(22) Date de dépôt: 10.12.2014
(51) Int. Cl.: B60H 1/00, B60H 1/32, F25B 41/06

(54) **Procédé de conditionnement thermique d'un habitacle d'un véhicule automobile**
Verfahren zur thermischen Konditionierung des Innenraums eines Kraftfahrzeugs
Method for thermal conditioning of a passenger compartment of a motor vehicle

(30) Priorité: 13.12.2013 FR 1362570
(43) Date de publication de la demande: 17.06.2015
(73) Titulaire: VALEO SYSTEMES THERMIQUES, 78320 Le Mesnil Saint-Denis (FR)
(72) Inventeur: Benouali, Jugurtha, 92140 CLAMART (FR); Beauvis, Régis, 92150 SURESNES (FR); Gardie, Patricia, 91190 GIF-SUR-YVETTE (FR); Delaforge, Laurent, 78125 ORCEMONT (FR)
(74) Mandataire: Tran, Chi-Hai

(56) Documents cités:
- EP-A1- 1 832 819
- WO-A1-01/27543
- DE-A1-102008 025 371
- FR-A1- 2 978 534
- JP-A- 2004 142 701
- US-A1- 2013 312 447

## Description

La présente invention concerne un procédé de conditionnement thermique d'un habitacle d'un véhicule automobile à l'aide d'un circuit de circulation d'un fluide frigorigène.

Le conditionnement thermique d'un véhicule permet notamment de chauffer l'air de l'habitacle ou, au contraire, de refroidir l'air de l'habitacle, de façon à améliorer le confort pour le conducteur ou les passagers du véhicule. Dans ce dernier cas, on parle alors de climatisation ou de conditionnement de l'habitacle.

Pour assurer un tel conditionnement, il est connu d'utiliser un circuit de circulation d'un fluide frigorigène comportant au moins un premier échangeur de chaleur apte à former un condenseur et/ou un évaporateur, un deuxième échangeur de chaleur apte à former un condenseur, un troisième échangeur de chaleur apte à former un évaporateur, un compresseur, un premier détendeur, un deuxième détendeur, et des moyens (conduites équipées de vannes commandées électriquement, par exemple) aptes à diriger le fluide frigorigène, ledit procédé consistant à faire circuler le fluide selon l'un au moins des modes suivants :
- un premier mode de fonctionnement dans lequel le fluide frigorigène circule selon une première boucle traversant au moins successivement le compresseur, le deuxième échangeur de chaleur, le premier détendeur et le premier échangeur de chaleur formant alors un évaporateur,
- un second mode de fonctionnement dans lequel le fluide frigorigène circule selon une seconde boucle traversant au moins successivement le compresseur, le premier échangeur de chaleur formant alors un condenseur, le deuxième détendeur et le troisième échangeur de chaleur. Un tel circuit de circulation est par exemple connu du document FR 2 978 534 A1, qui est considéré comme l'art antérieur le plus proche.

Le premier mode de fonctionnement permet par exemple de prélever des calories sur l'air externe au véhicule, à l'aide du premier échangeur de chaleur (évaporateur), puis de chauffer l'air débouchant dans l'habitacle, à l'aide du deuxième échangeur de chaleur (condenseur). Le circuit fonctionne alors à la manière d'une pompe à chaleur.

Dans le second mode de fonctionnement, l'air destiné à l'habitacle est refroidi par le troisième échangeur de chaleur (évaporateur), les calories étant rejetées au niveau du premier échangeur de chaleur (condenseur). Ce mode de fonctionnement permet ainsi de climatiser l'habitacle du véhicule.

Le premier détendeur et/ou le second détendeur sont par exemple des détendeurs pilotés électriquement. De tels détendeurs sont relativement coûteux.

Il existe d'autres types de détendeurs, tels par exemple que des détendeurs thermostatiques, également notés TXV. Un détendeur de type TXV permet par exemple de contrôler le débit de fluide traversant un évaporateur, en maintenant une surchauffe en sortie de l'évaporateur. Un tel détendeur ne peut pas être utilisé pour un fonctionnement selon le premier mode précité (mode dit de pompe à chaleur). En effet, dans un tel cas, le maintien d'une surchauffe en sortie de l'évaporateur réduit fortement les performances de ce dernier.

Il existe également des détendeurs non pilotés à variation d'ouverture, également notés détendeurs PXV ou DPXV. La variation de l'ouverture est dans ce cas fonction de la pression du fluide en amont du détendeur (détendeur PXV) ou fonction de la différence de pression du fluide entre l'entrée et la sortie du détendeur (détendeur DPXV). Les détendeurs actuels de ce type, s'ils conviennent pour un fonctionnement selon le second mode précité (mode « climatisation » ou « conditionnement »), ne sont en revanche pas adaptés au premier mode précité (mode « pompe à chaleur »). De tels détendeurs sont peu chers, car ils ne sont pas pilotés électriquement, mais les lois d'ouverture définissant l'ouverture dudit détendeur en fonction, soit de la pression d'entrée, soit de la différence de pression, ne sont pas adaptées au mode « pompe à chaleur ».

L'invention a notamment pour but d'apporter une solution simple, efficace et économique à ces problèmes.

A cet effet, elle propose un procédé de conditionnement thermique d'un habitacle d'un véhicule automobile à l'aide d'un circuit de circulation d'un fluide frigorigène comportant au moins un premier échangeur de chaleur apte à former un condenseur et/ou un évaporateur, un deuxième échangeur de chaleur apte à former un condenseur, un troisième échangeur de chaleur apte à former un évaporateur, un compresseur, un premier détendeur, un deuxième détendeur, et des moyens aptes à diriger le fluide frigorigène, ledit procédé consistant à faire circuler le fluide selon l'un au moins des modes suivants :
- un premier mode de fonctionnement dans lequel le fluide frigorigène circule selon une première boucle traversant au moins successivement le compresseur, le deuxième échangeur de chaleur, le premier détendeur et le premier échangeur de chaleur lequel forme alors un évaporateur,
- un second mode de fonctionnement dans lequel le fluide frigorigène circule selon une seconde boucle traversant au moins successivement le compresseur, le premier échangeur de chaleur lequel forme alors un condenseur, le deuxième détendeur et le troisième échangeur de chaleur,
caractérisé en ce que le premier détendeur est un détendeur non piloté dont l'ouverture, traversée par le fluide frigorigène lors du premier mode de fonctionnement, est variable en fonction de la pression d'entrée du premier détendeur ou en fonction de la différence de pression entre l'entrée et la sortie de fluide frigorigène dans le premier détendeur, la section de l'ouverture du premier détendeur étant constante en dessous d'une certaine valeur de seuil de ladite pression d'entrée et/ou en dessous d'une certaine valeur de seuil de ladite différence de pression, ladite section étant croissante avec ladite pression d'entrée et/ou avec ladite différence de pression, au-delà de la valeur de seuil correspondante.

La loi d'ouverture du premier détendeur permet d'adapter un détendeur non piloté à ouverture variable (type PXV ou DPXV), et donc peu cher, au second mode de fonctionnement, c'est-à-dire au mode « pompe à chaleur ».

Cette loi a été définie expérimentalement par la Demanderesse, en pratiquant une succession de tests. Il s'avère qu'elle permet de maximiser la puissance de chauffage ainsi que le coefficient de performance (également noté C.O.P.), qui est le rapport de la puissance de chauffage sur la puissance électrique consommée. En d'autres termes, si la puissance thermique de chauffage spécifiée ou à fournir est atteinte, la loi s'attache à maximiser le coefficient de performance du circuit.

La différence de pression définie précédemment est égale à la pression d'entrée du détendeur correspondant moins la pression de sortie du même détendeur.

Selon une caractéristique de l'invention, au-dessus de ladite valeur de seuil correspondante, ladite ouverture est linéairement croissante avec ladite pression d'entrée et/ou avec ladite différence de pression.

Selon une forme de réalisation de l'invention, le second échangeur réchauffe de l'air débouchant dans l'habitacle du véhicule.

On parle alors de mode de chauffage direct, ou de mode « pompe à chaleur » direct.

Selon une autre forme de réalisation de l'invention, le second échangeur échange de la chaleur entre ledit fluide frigorigène et un fluide caloporteur d'un circuit secondaire comportant, outre ledit second échangeur de chaleur, une pompe et un quatrième échangeur de chaleur apte à échanger de la chaleur entre ledit fluide caloporteur et de l'air destiné à déboucher dans l'habitacle du véhicule.

On parle alors de mode de chauffage indirect, ou de mode « pompe à chaleur » indirect, le chauffage de l'air étant réalisé de façon indirecte, par l'intermédiaire du circuit secondaire utilisant le fluide caloporteur.

L'avantage d'utiliser une telle forme de réalisation est de pouvoir aisément adapter l'invention aux dispositifs de conditionnement équipant actuellement une grande partie des véhicules en circulation et utilisant un circuit de fluide caloporteur.

De préférence, le fluide frigorigène traverse un accumulateur situé en amont du compresseur dans ledit circuit de fluide frigorigène.

La présence d'un accumulateur permet de s'assurer que seul du fluide frigorigène d'un titre vapeur supérieur à 95% traverse le compresseur, de manière à éviter toute dégradation de ce dernier.

En outre, le deuxième détendeur peut être un détendeur non piloté dont l'ouverture, traversée par le fluide frigorigène lors du second mode de fonctionnement, est variable en fonction de la pression d'entrée du deuxième détendeur ou en fonction de la différence de pression entre l'entrée et la sortie de fluide frigorigène dans le deuxième détendeur, la section de l'ouverture du deuxième détendeur étant croissante avec ladite pression d'entrée et/ou avec ladite différence de pression.

Les lois d'ouverture du premier détendeur et du second détendeur sont donc différentes. En effet, dans le cas du deuxième détendeur, la loi d'ouverture n'est pas fonction d'une valeur seuil de pression ou d'une valeur seuil de différence de pression. Dans le cas du deuxième détendeur, la loi d'ouverture peut être de type linéaire.

Le fluide frigorigène peut être du type 1,1,1,2-Tetrafluoroéthane ou R134A.

En variante, le fluide frigorigène peut être du type 2,3,3,3-tétrafluoropropène, HFO-1234yf ou R-1234yf.

En outre, les deuxième et troisième échangeurs de chaleur peuvent être intégrés à une installation de chauffage, ventilation et/ou climatisation comportant un canal de circulation d'un flux d'air débouchant dans l'habitacle du véhicule et puisant de l'air à l'extérieur du véhicule, ladite installation comportant un volet d'obturation mobile monté dans le canal, en aval du troisième échangeur de chaleur et en amont du deuxième échangeur de chaleur, dans le sens de circulation du flux d'air, et en ce que, dans le premier mode de fonctionnement, le volet est ouvert de manière à ce que le flux d'air traverse successivement le troisième échangeur de chaleur puis le deuxième échangeur de chaleur, et que, dans le deuxième mode de fonctionnement, le volet est fermé de manière à ce que le flux d'air traverse uniquement le troisième échangeur de chaleur et est détourné du deuxième échangeur de chaleur.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'un dispositif de conditionnement thermique d'un habitacle d'un véhicule automobile, apte à mettre en oeuvre le procédé selon une première forme de réalisation de l'invention,
- la figure 2 est une vue correspondant à la figure 1, illustrant un premier mode de fonctionnement,
- la figure 3 est un diagramme de Mollier illustrant le premier mode de fonctionnement,
- la figure 4 est une vue correspondant à la figure 1, illustrant un deuxième mode de fonctionnement,
- la figure 5 est un diagramme de Mollier illustrant le deuxième mode de fonctionnement,
- la figure 6 est une vue correspondant à la figure 1, illustrant un dispositif de conditionnement thermique d'un habitacle d'un véhicule automobile, apte à mettre en oeuvre le procédé selon une deuxième forme de réalisation de l'invention,
- la figure 7 est une vue correspondant à la figure 6, illustrant un premier mode de fonctionnement,
- la figure 8 est une vue correspondant à la figure 6, illustrant un deuxième mode de fonctionnement,
- la figure 9 est un diagramme représentant le diamètre de l'ouverture du premier détendeur en fonction de la différence de pression entre l'entrée et la sortie du premier détendeur et illustrant la loi d'ouverture du premier détendeur, dans le cas où le fluide frigorigène est du type R-134a,
- la figure 10 est un diagramme similaire à celui de la figure 9, illustrant le cas où le fluide frigorigène est du type R-1234yf,
- la figure 11 est un diagramme représentant le diamètre de l'ouverture du deuxième détendeur en fonction de la différence de pression entre l'entrée et la sortie du deuxième détendeur et illustrant la loi d'ouverture du deuxième détendeur, dans le cas où le fluide frigorigène est du type R-134a,
- la figure 12 est un diagramme similaire à celui de la figure 11, illustrant le cas où le fluide frigorigène est du type R-1234yf,
- la figure 13 est un diagramme représentant le diamètre de l'ouverture du premier détendeur en fonction de la pression d'entrée du premier détendeur et illustrant la loi d'ouverture du premier détendeur, dans le cas où le fluide frigorigène est du type R-134a,
- la figure 14 est un diagramme similaire à celui de la figure 13, illustrant le cas où le fluide frigorigène est du type R-1234yf,
- la figure 15 est un diagramme représentant le diamètre de l'ouverture du deuxième détendeur en fonction de la pression d'entrée du deuxième détendeur et illustrant la loi d'ouverture du deuxième détendeur, dans le cas où le fluide frigorigène est du type R-134a,
- la figure 16 est un diagramme similaire à celui de la figure 15, illustrant le cas où le fluide frigorigène est du type R-1234yf.

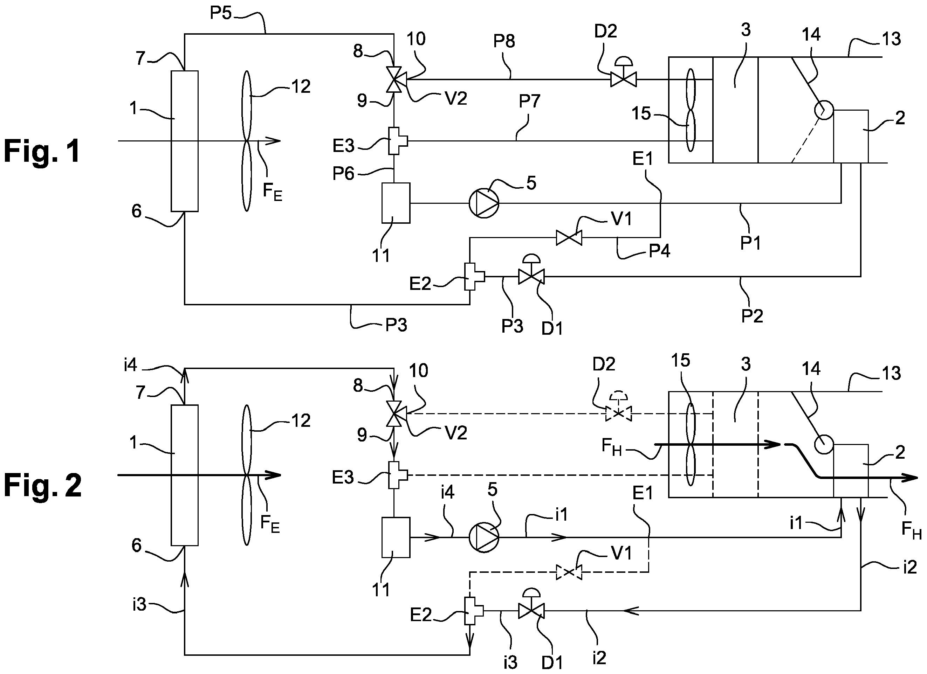

La figure 1 représente un dispositif de conditionnement thermique d'un habitacle d'un véhicule automobile selon une première forme de réalisation de l'invention. Ce dispositif comporte un circuit de fluide frigorigène comprenant un premier échangeur de chaleur 1 apte à former un condenseur et/ou un évaporateur, un deuxième échangeur de chaleur 2 apte à former un condenseur, un troisième échangeur de chaleur 3 apte à former un évaporateur, un compresseur 5, un premier détendeur D1, un deuxième détendeur D2, une première vanne V1 d'arrêt et une seconde vanne V2 de type 3 voies.

Les premier et second détendeurs D1, D2 sont des détendeurs non pilotés dont les ouvertures respectives, destinées à être traversées par le fluide frigorigène, sont variables en fonction de la pression d'entrée du détendeur correspondant D1, D2 (appelés alors détendeurs PXV) ou en fonction de la différence de pression entre l'entrée et la sortie du détendeur correspondant D1, D2 (appelés alors détendeurs DPXV).

Le circuit comporte en outre :
- une première portion P1 reliant la sortie du compresseur 5 à l'entrée du deuxième échangeur de chaleur 2, la première portion P1 comportant un embranchement E1,
- une deuxième portion P2 reliant la sortie du deuxième échangeur de chaleur 2 à l'entrée du premier détendeur D1,
- une troisième portion P3 reliant la sortie du premier détendeur D1 à une première extrémité 6 du premier échangeur de chaleur 1, apte à former une entrée ou une sortie, ladite troisième portion P3 comportant un embranchement E2,
- une quatrième portion P4 reliant le premier embranchement E1 et le second embranchement E2, la quatrième portion P4 étant équipée de la vanne d'arrêt V1,
- une cinquième portion P5 reliant une seconde extrémité 7 du premier échangeur de chaleur 1, apte à former une sortie ou une entrée, et une première voie 8 de la vanne V2,
- une sixième portion P6 reliant une deuxième voie 9 de la vanne V2 à l'entrée du compresseur 5, la sixième portion P3 comportant un troisième embranchement E3 et étant équipée d'un accumulateur 11 situé entre l'embranchement E3 et l'entrée du compresseur 5,
- une septième portion P7 reliant le troisième embranchement E3 à la sortie du troisième échangeur de chaleur 3,
- une huitième portion P8 reliant la troisième voie 10 de la vanne V2 et l'entrée du troisième échangeur de chaleur 3, la huitième portion P8 étant équipée du second détendeur D2.

Le premier échangeur de chaleur 1 est par exemple disposé en face avant d'un véhicule automobile, de façon à échanger de la chaleur entre l'air externe au véhicule et un fluide frigorigène circulant dans le circuit.

Un premier ventilateur 12 permet de générer et contrôler le flux d'air externe F_{E} traversant le premier échangeur de chaleur 1.

Les deuxième et troisième échangeurs de chaleur 2, 3 peuvent être intégrés à une l'installation de chauffage, ventilation et/ou climatisation, également appelée H.V.A.C. (Heating, Ventilation and Air-Conditioning) comportant un canal de circulation 13 d'un flux d'air F_{H} destiné à déboucher dans l'habitacle du véhicule et puisant de l'air à l'extérieur du véhicule. Une telle installation comporte un volet d'obturation mobile 14 monté dans le canal 13, en aval du troisième échangeur de chaleur 3 et en amont du deuxième échangeur de chaleur 2, dans le sens de circulation du flux d'air F_{H}, c'est-à-dire de l'extérieur du véhicule vers l'habitacle.

En position ouverte du volet 14 (en traits forts), le flux d'air F_{H} traverse successivement le troisième échangeur de chaleur 3 puis le deuxième échangeur de chaleur 2. A l'inverse, en position fermée du volet 14 (en traits pointillés), le flux d'air F_{H} traverse uniquement le troisième échangeur de chaleur 3 et est détourné du deuxième échangeur de chaleur 2.

Un deuxième ventilateur 15 permet de générer et contrôler le flux d'air F_{H} traversant le canal 13 précité et débouchant dans l'habitacle.

Le fonctionnement de ce circuit va maintenant être décrit plus en détail.

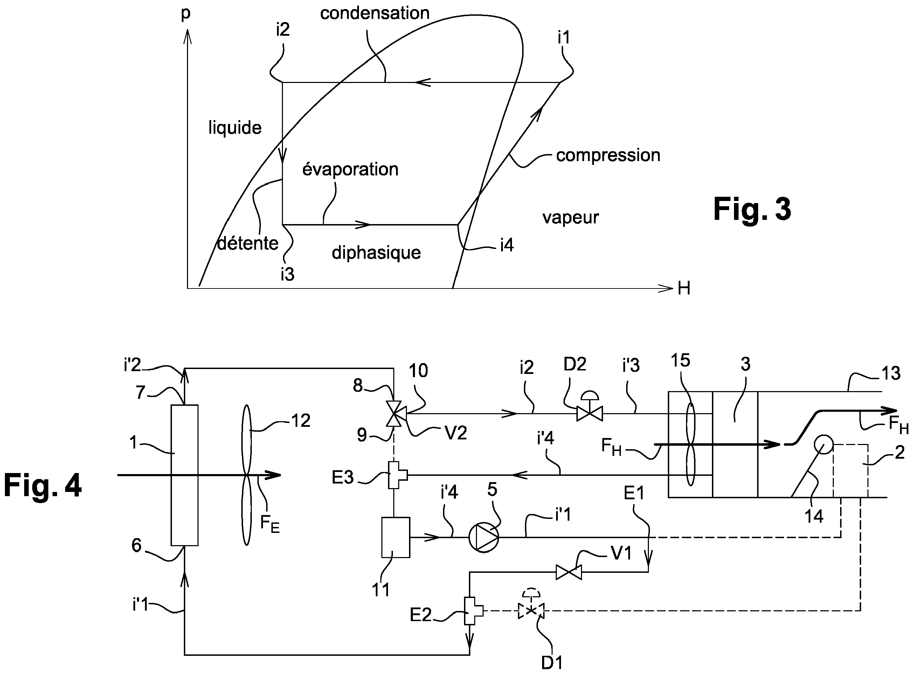

Un premier mode de fonctionnement est illustré aux figures 2 et 3. Sur la figure 2 (et sur la figure 4 décrite ci-après), les portions ou les éléments du circuit traversés par le flux de fluide frigorigène sont représentés en traits forts tandis que les portions ou les éléments du circuit dans lequel le fluide frigorigène ne circule pas sont représentés en traits pointillés.

Dans ce mode de fonctionnement, le volet 14 est dans sa position ouverte, la vanne d'arrêt V1 est fermée et la vanne V2 a sa troisième voie 10 qui est fermée, de sorte que le fluide frigorigène circule selon une première boucle traversant successivement le deuxième échangeur de chaleur 2 (condenseur), le détendeur D1, le premier échangeur de chaleur 1 (évaporateur), la vanne V2, l'accumulateur 11 et le compresseur 5.

Le cycle thermodynamique correspondant est illustré sur le diagramme de Mollier de la figure 3. Sur ce diagramme, l'abscisse est formée par l'enthalpie H et l'ordonnée est formée par la pression p du fluide frigorigène.

Des points référencés i1 à i4 ont été reportés à la fois sur le diagramme de Mollier et sur le circuit illustré à la figure 2 afin de faciliter la compréhension. Les phases (liquide ; diphasique, c'est-à-dire liquide et vapeur ; vapeur) sont également indiquées sur le diagramme, ainsi que les différentes étapes du cycle (évaporation, condensation, compression, détente).

Dans ce mode de fonctionnement, des calories sont prélevées sur le flux d'air F_{E} provenant de l'extérieur du véhicule, à l'aide du premier échangeur de chaleur 1 (évaporateur), puis le flux d'air F_{H} débouchant dans l'habitacle est chauffé, à l'aide du deuxième échangeur de chaleur 2 (condenseur). Le circuit fonctionne alors à la manière d'une pompe à chaleur.

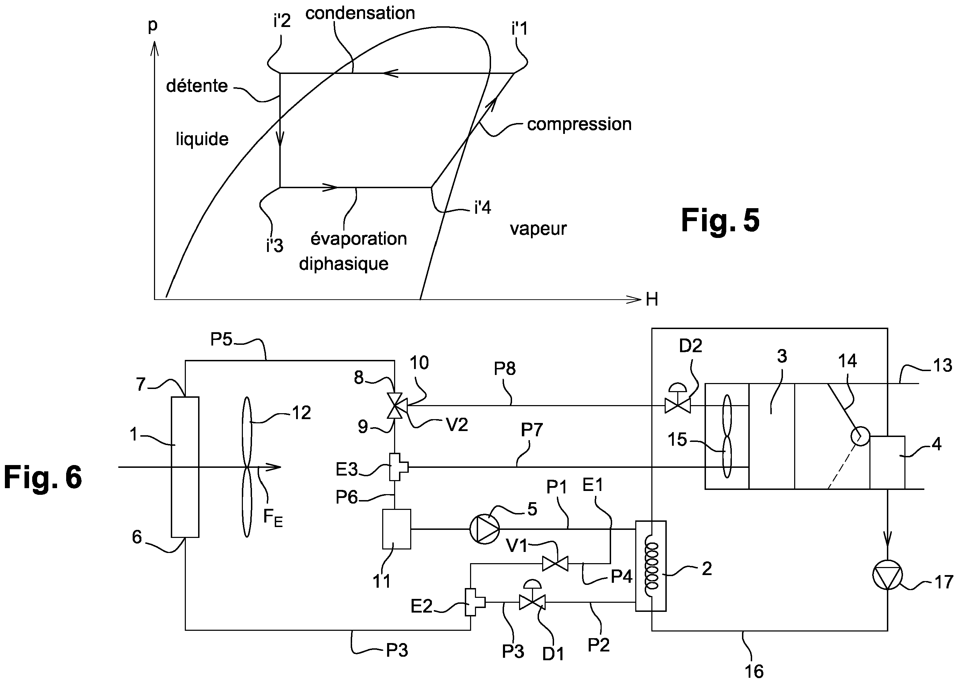

Un deuxième mode de fonctionnement est illustré aux figures 4 et 5. Dans ce mode de fonctionnement, le volet 14 est dans sa position fermée, la vanne d'arrêt V1 est ouverte et la vanne V2 a sa deuxième voie 9 qui est fermée, de sorte que le fluide frigorigène circule selon une deuxième boucle traversant successivement la vanne V1, le premier échangeur de chaleur 1 (condenseur), la vanne V2, le détendeur D2, le troisième échangeur de chaleur 3 (évaporateur), l'accumulateur 11 et le compresseur 5.

Comme précédemment, le cycle thermodynamique correspondant au deuxième mode de fonctionnement est illustré sur le diagramme de Mollier de la figure 5. Des points référencés i'1 à 'i4 ont été reportés à la fois sur le diagramme de Mollier et sur le circuit illustré à la figure 4 afin de faciliter la compréhension.

Dans le deuxième mode de fonctionnement, le flux d'air F_{H} destiné à l'habitacle est refroidi par le troisième échangeur de chaleur 3 (évaporateur), les calories étant rejetées au niveau du premier échangeur de chaleur 1 (condenseur). Ce mode de fonctionnement permet ainsi de climatiser l'habitacle du véhicule.

La figure 6 représente un dispositif de conditionnement thermique d'un habitacle d'un véhicule automobile selon une deuxième forme de réalisation de l'invention. Celle-ci diffère de la forme de réalisation illustrée précédemment en référence aux figures 1 à 5, en ce que le second échangeur de chaleur 2 (condenseur) est un échangeur apte à échanger de la chaleur entre le fluide frigorigène et un fluide caloporteur d'un circuit secondaire 16 comportant, outre ledit second échangeur de chaleur 2, une pompe 17 et un quatrième échangeur de chaleur 4 apte à échanger de la chaleur entre ledit fluide caloporteur et le flux d'air F_{H} destiné à déboucher dans l'habitacle du véhicule. Pour cela, le quatrième échangeur de chaleur 4 est logé dans le canal 13, en aval du volet 14, le deuxième échangeur de chaleur 2 étant situé à l'extérieur de ce canal 3.

En position ouverte du volet 14 (en traits forts), le flux d'air F_{H} traverse successivement le troisième échangeur de chaleur 3 puis le quatrième échangeur de chaleur 4. A l'inverse, en position fermée du volet 14 (en traits pointillés), le flux d'air F_{H} traverse uniquement le troisième échangeur de chaleur 3 et est détourné du quatrième échangeur de chaleur 4.

L'avantage d'utiliser une telle forme de réalisation est de pouvoir aisément s'adapter aux dispositifs de conditionnement équipant actuellement une grande partie des véhicules en circulation et utilisant un circuit de fluide caloporteur.

Le fonctionnement de ce circuit va maintenant être décrit plus en détail.

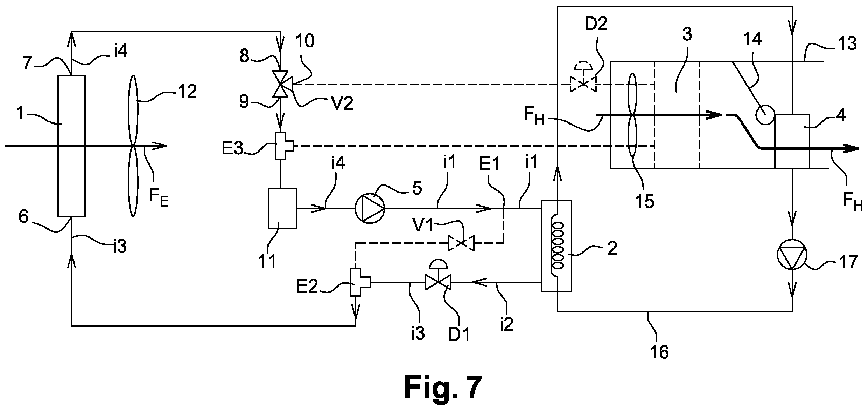

Un premier mode de fonctionnement est illustré à la figure 7. Dans ce mode de fonctionnement, le volet 14 est dans sa position ouverte, la vanne d'arrêt V1 est fermée et la vanne V2 a sa troisième voie 10 qui est fermée, de sorte que le fluide frigorigène circule selon une première boucle traversant successivement le deuxième échangeur de chaleur 2 (condenseur), le détendeur D1, le premier échangeur de chaleur 1 (évaporateur), la vanne V2, l'accumulateur 11 et le compresseur 5. Parallèlement, le fluide caloporteur traverse successivement le second échangeur de chaleur 2, le quatrième échangeur de chaleur 4 et la pompe 17.

Dans ce mode de fonctionnement, des calories sont prélevées sur le flux d'air F_{E} provenant de l'extérieur du véhicule, à l'aide du premier échangeur de chaleur 1 (évaporateur), puis le flux d'air F_{H} débouchant dans l'habitacle est chauffé, à l'aide du quatrième échangeur de chaleur 4, par l'intermédiaire du second échangeur de chaleur 2 assurant l'interface entre le circuit de fluide frigorigène et le circuit de fluide caloporteur 16. Le circuit de fluide frigorigène fonctionne alors à la manière d'une pompe à chaleur.

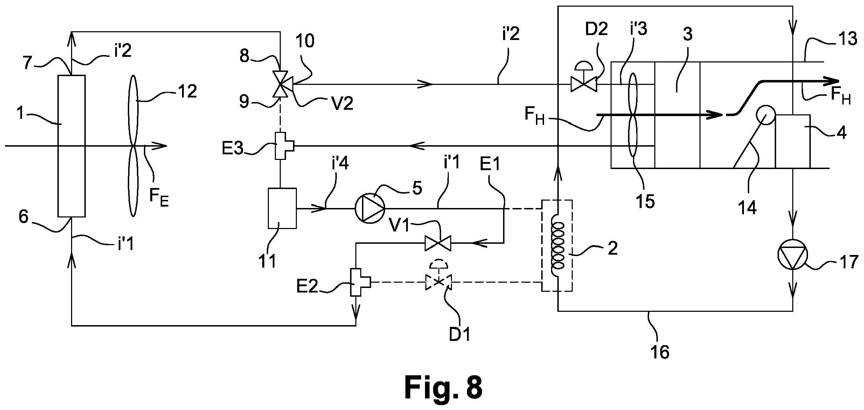

Un deuxième mode de fonctionnement est illustré à la figure 8. Dans ce mode de fonctionnement, le volet 14 est dans sa position fermée, la vanne d'arrêt V1 est ouverte et la vanne V2 a sa deuxième voie 9 qui est fermée, de sorte que le fluide frigorigène circule selon une deuxième boucle traversant successivement la vanne V1, le premier échangeur de chaleur 1 (condenseur), la vanne V2, le détendeur D2, le troisième échangeur de chaleur 3 (évaporateur), l'accumulateur 11 et le compresseur 5. Parallèlement, le fluide caloporteur peut circuler ou non dans le circuit correspondant 16, dans le sens indiqué par les flèches à la figure 8.

Dans le deuxième mode de fonctionnement, le flux d'air F_{H} destiné à l'habitacle est refroidi par le troisième échangeur de chaleur 3 (évaporateur), les calories étant rejetées au niveau du premier échangeur de chaleur 1 (condenseur). Ce mode de fonctionnement permet ainsi de climatiser l'habitacle du véhicule. Le quatrième échangeur de chaleur 4 n'a pas d'influence thermique sur le flux d'air F_{H} entrant dans l'habitacle. En effet, le flux d'air F_{H} est détourné du quatrième échangeur de chaleur 4 par le volet 14 et le fluide caloporteur circulant dans le quatrième échangeur 4 n'est pas chauffé par le deuxième échangeur de chaleur 2.

L'invention vise à définir l'ouverture de chacun des détendeurs D1 et D2, pour les modes de fonctionnement précités. Cette ouverture est traversée par le fluide frigorigène et a donc une influence sur le débit et sur la pression du fluide frigorigène dans le circuit correspondant.

La loi d'ouverture définit en particulier l'ouverture (par exemple le diamètre d'ouverture du détendeur considéré D1, D2 ou la section d'ouverture du détendeur considéré D1, D2) en fonction de la pression d'entrée du détendeur D1, D2 ou de la différence de pression entre l'entrée et la sortie du détendeur considéré D1, D2, c'est-à-dire la pression d'entrée moins la pression de sortie.

Chaque loi a été définie expérimentalement par la Demanderesse, en pratiquant une succession de tests afin de déterminer la loi permettant de maximiser la puissance thermique (puissance de chauffage ou puissance de refroidissement, en fonction du mode de fonctionnement) ainsi que le coefficient de performance (également noté C.O.P.), qui est le rapport de la puissance thermique sur la puissance électrique consommée. En d'autres termes, si la puissance thermique spécifiée ou à fournir est atteinte, la loi s'attache à maximiser le coefficient de performance.

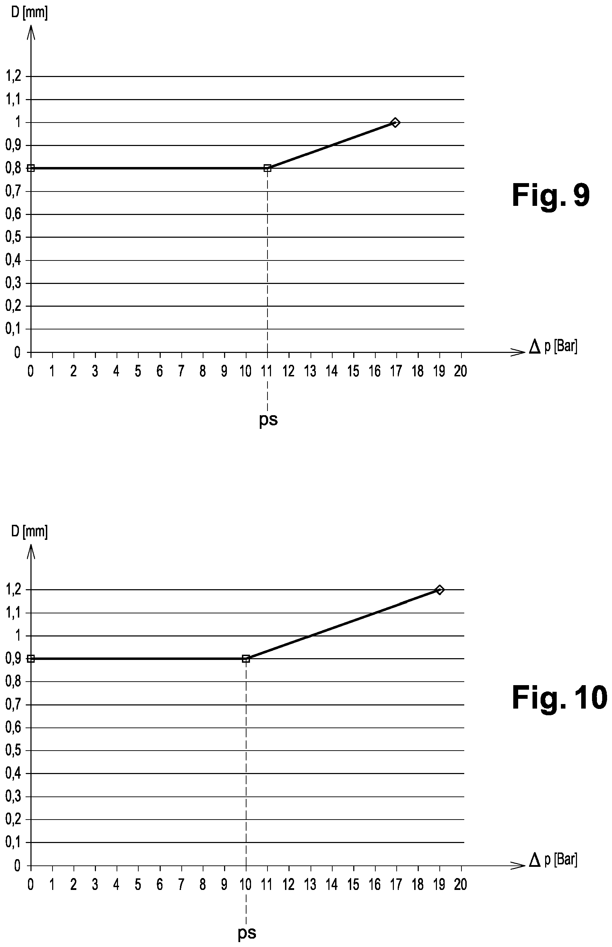

Les figures 9 et 10 sont des diagrammes représentant les lois d'ouverture du premier détendeur D1, respectivement dans le cas où le fluide frigorigène est du type R-134a et dans le cas où le fluide frigorigène est du type R-1234yf. Ces lois régissent donc le premier mode de fonctionnement (mode pompe à chaleur).

On notera que le fluide frigorigène du type R-134a est du 1,1,1,2-tétrafluoroéthane et que le fluide frigorigène du type R-1234yf est du 2,3,3,3-tétrafluoropropène.

Ces diagrammes ont tous deux pour ordonnée le diamètre équivalent D de l'ouverture, exprimé en millimètres, et pour abscisse la différence de pression (notée Δp) entre l'entrée et la sortie du premier détendeur D1, exprimée en bar.

On remarque que, en dessous d'une valeur seuil notée Δps, la loi d'ouverture O = f(Δp) est du type O=b. On remarque également que, au-dessus de la valeur seuil Δps, la loi d'ouverture est du type O = a. Δp + b.

Dans le cas d'un fluide frigorigène du type R-134a (figure 9), si ΔP≤ 11 bars, alors O = 0,8 mm (+/- 0,15 mm) et si ΔP>11 bars, alors O= 0,05. ΔP+0,25 (+/- 0,15 mm)

Dans le cas d'un fluide frigorigène du type R-1234yf (figure 10), si ΔP≤ 10 bars, alors O= 0,9 mm (+/- 0,15 mm) et si ΔP>10 bars, alors O= 0,0333. ΔP+0,57 (+/- 0,15 mm)

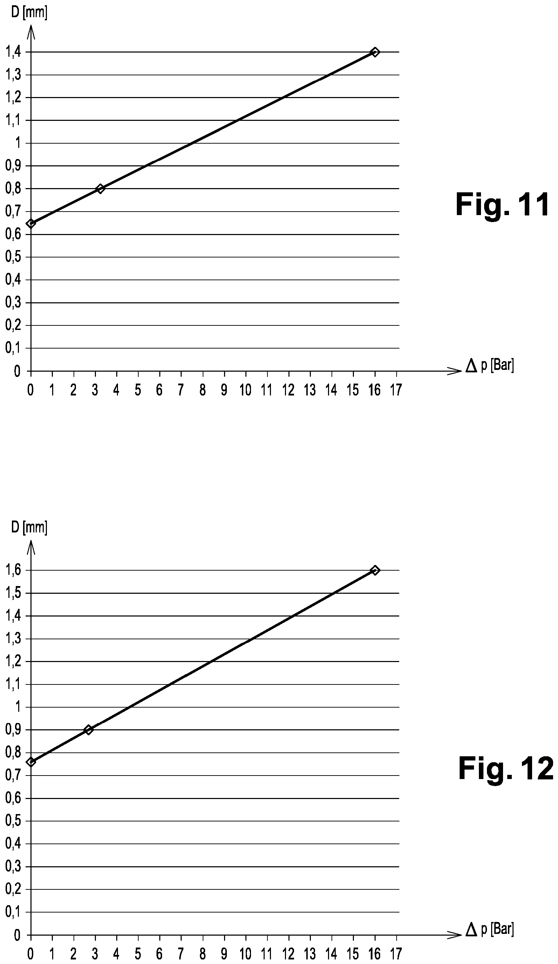

Les figures 11 et 12 sont des diagrammes représentant les lois d'ouverture du second détendeur D2, respectivement dans le cas où le fluide frigorigène est du type R-134a et dans le cas où le fluide frigorigène est du type R-1234yf. Ces lois régissent donc le second mode de fonctionnement (mode de climatisation ou de conditionnement).

Comme précédemment, ces diagrammes ont tous deux pour ordonnée le diamètre équivalent D de l'ouverture, exprimé en millimètres, et pour abscisse la différence de pression (notée Δp) entre l'entrée et la sortie du second détendeur D2, exprimée en bar.

On remarque que, quelle que soit la valeur de Δp, la loi d'ouverture O = g(Δp) est du type O=a'. Δp +b'.

Dans le cas d'un fluide frigorigène du type R-134a (figure 11), O= 0,0462.ΔP+0,66 (+/- 0,15 mm).

Dans le cas d'un fluide frigorigène du type R-1234yf (figure 12), O= 0,0538.ΔP+0,74 (+/- 0,15 mm).

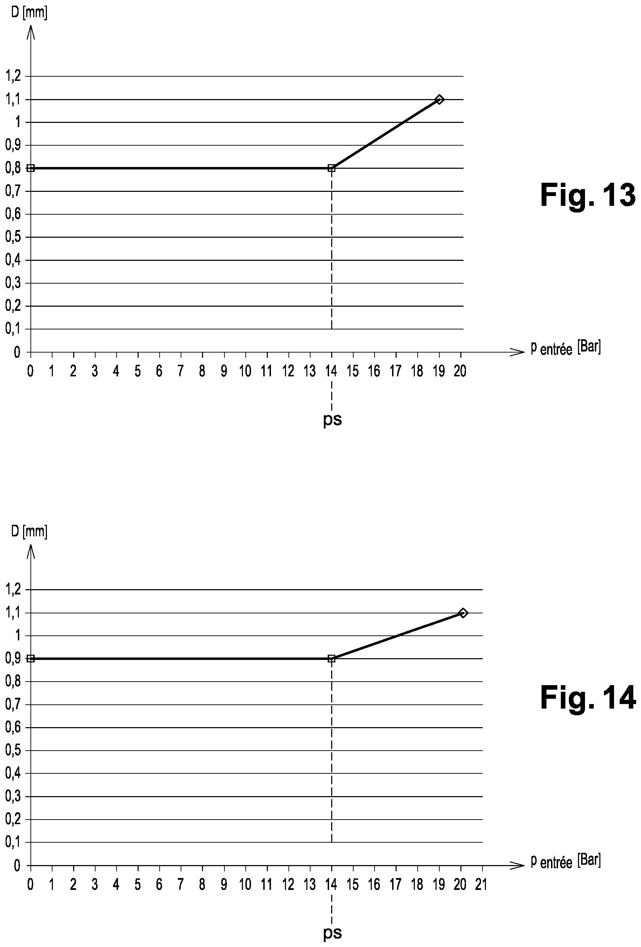

Les figures 13 et 14 sont des diagrammes représentant les lois d'ouverture du premier détendeur D1, respectivement dans le cas où le fluide frigorigène est du type R-134a et dans le cas où le fluide frigorigène est du type R-1234yf. Ces lois régissent donc le premier mode de fonctionnement (mode pompe à chaleur).

Ces diagrammes ont tous deux pour ordonnée le diamètre d'ouverture équivalent D, exprimé en mm, et pour abscisse la pression d'entrée du premier détendeur D1, notée p_{entrée} et exprimée en bar.

On remarque que, en dessous d'une valeur seuil notée ps, la loi d'ouverture O = f(p_{entrée}) est du type O=b. On remarque également que, au-dessus de la valeur seuil ps, la loi d'ouverture est du type O = a. p_{entrée} + b.

Dans le cas d'un fluide frigorigène du type R-134a, (figure 13), si p_{entrée} ≤ 14 bar, alors O= 0,8 mm (+/- 0,15 mm) et si p_{entrée} >14 bar, alors O= 0,06. P_{entrée} -0,04 (+/- 0,15 mm).

Dans le cas d'un fluide frigorigène du type R-1234yf (figure 14), si p_{entrée} ≤ 14 bars, alors O= 0,9 mm (+/- 0,15 mm) et si p_{entrée} >14 bar, alors O= 0,0333. p_{entrée} +0,43 (+/- 0,15 mm).

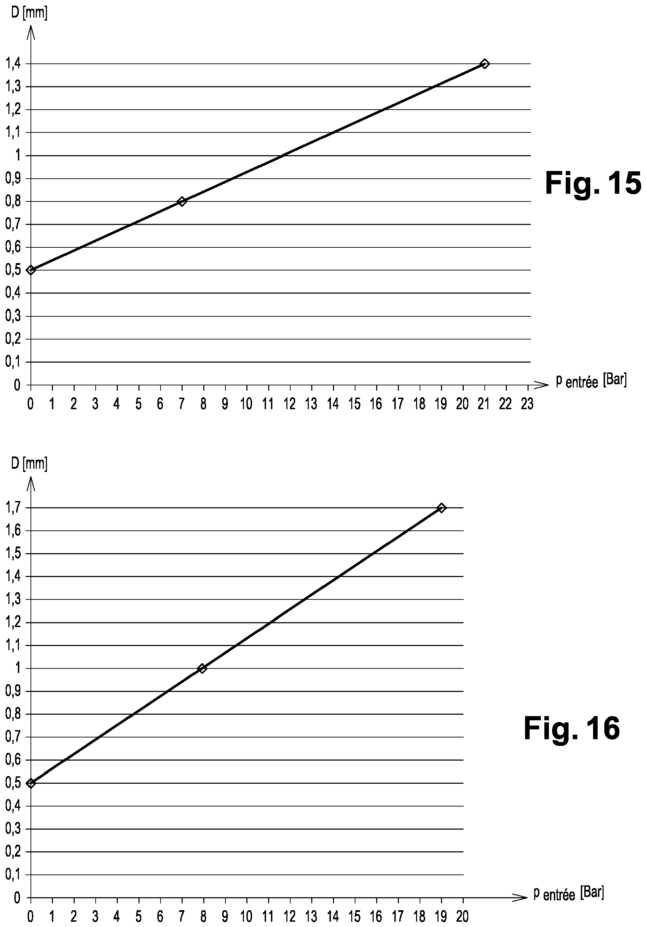

Les figures 15 et 16 sont des diagrammes représentant les lois d'ouverture du second détendeur D2, respectivement dans le cas où le fluide frigorigène est du type R-134a et dans le cas où le fluide frigorigène est du type R-1234yf. Ces lois régissent donc le second mode de fonctionnement (mode de climatisation ou de conditionnement).

Comme précédemment, ces diagrammes ont tous deux pour ordonnée le diamètre d'ouverture équivalent D, exprimé en mm, et pour abscisse la pression d'entrée du second détendeur D2, notée p_{entrée} et exprimée en bar.

On remarque que, quelle que soit la valeur de la pression d'entrée, la loi d'ouverture O = g(p_{entrée}) est du type O=a'.p_{entrée} +b'.

Dans le cas d'un fluide frigorigène du type R-134a (figure 15), O= 0,0429.p_{entrée} +0,5 (+/- 0,15 mm). Dans le cas d'un fluide frigorigène du type R-1234yf (figure 16), O=0,0636.p_{entrée}+0,49 (+/- 0,15 mm).

## Revendications

1. Procédé de conditionnement thermique d'un habitacle d'un véhicule automobile à l'aide d'un circuit de circulation d'un fluide frigorigène comportant au moins un premier échangeur de chaleur (1) apte à former un condenseur et/ou un évaporateur, un deuxième échangeur de chaleur (2) apte à former un condenseur, un troisième échangeur de chaleur (3) apte à former un évaporateur, un compresseur (5) un premier détendeur (D1), un deuxième détendeur (D2), et des moyens (V1, V2, P1 à P8) aptes à diriger le fluide frigorigène, ledit procédé consistant à faire circuler le fluide selon l'un au moins des modes suivants :
- un premier mode de fonctionnement dans lequel le fluide frigorigène circule selon une première boucle traversant au moins successivement le compresseur (5), le deuxième échangeur de chaleur (2), le premier détendeur (D1) et le premier échangeur de chaleur (1) lequel forme alors un évaporateur,
- un second mode de fonctionnement dans lequel le fluide frigorigène circule selon une seconde boucle traversant au moins successivement le compresseur (5), le premier échangeur de chaleur (1) lequel forme alors un condenseur, le deuxième détendeur (D2) et le troisième échangeur de chaleur (3),
**caractérisé en ce que** le premier détendeur (D1) est un détendeur non piloté dont l'ouverture, traversée par le fluide frigorigène lors du premier mode de fonctionnement, est variable en fonction de la pression d'entrée (p_{entrée}) du premier détendeur (D1) ou en fonction de la différence de pression (Δp) entre l'entrée et la sortie de fluide frigorigène dans le premier détendeur (D1), la section de l'ouverture du premier détendeur (D1) étant constante en dessous d'une certaine valeur de seuil (ps) de ladite pression d'entrée (p_{entrée}) et/ou en dessous d'une certaine valeur de seuil (Δps) de ladite différence de pression (Δp), ladite section étant croissante avec ladite pression d'entrée (p_{entrée}) et/ou avec ladite différence de pression (Δp), au-delà de la valeur de seuil correspondante (ps, Δps).

2. Procédé selon la revendication 1, **caractérisé en ce que**, au-dessus de ladite valeur de seuil correspondante (ps, Δps), ladite ouverture est linéairement croissante avec ladite pression d'entrée (p_{entrée}) et/ou avec ladite différence de pression (Δp).

3. Procédé selon la revendication 1 ou 2, **caractérisé en ce que** le second échangeur de chaleur (2) réchauffe de l'air (F_{H}) débouchant dans l'habitacle du véhicule.

4. Procédé selon la revendication 1 ou 2, **caractérisé en ce que** le second échangeur de chaleur (2) échange de la chaleur entre ledit fluide frigorigène et un fluide caloporteur d'un circuit secondaire (16) comportant, outre ledit second échangeur de chaleur (2), une pompe (17) et un quatrième échangeur de chaleur (4) apte à échanger de la chaleur entre ledit fluide caloporteur et de l'air (F_{H}) destiné à déboucher dans l'habitacle du véhicule.

5. Procédé selon l'une des revendications 1 à 4, **caractérisé en ce que** le fluide frigorigène traverse un accumulateur (11) situé en amont du compresseur (5) dans ledit circuit de fluide frigorigène.

6. Procédé selon l'une des revendications 1 à 5, **caractérisé en ce que** le deuxième détendeur (2) est un détendeur non piloté dont l'ouverture, traversée par le fluide frigorigène lors du second mode de fonctionnement, est variable en fonction de la pression d'entrée (p_{entrée}) du deuxième détendeur ou en fonction de la différence de pression (Δp) entre l'entrée et la sortie de fluide frigorigène dans le deuxième détendeur (D2), la section de l'ouverture du deuxième détendeur (D2) étant croissante avec ladite pression d'entrée (p_{entrée}) et/ou avec ladite différence de pression (Δp).

7. Procédé selon l'une des revendications 1 à 6, **caractérisé en ce que** le fluide frigorigène est du type 1,1,1,2-tétrafluoroéthane ou R134A.

8. Procédé selon l'une des revendications 1 à 6, **caractérisé en ce que** le fluide frigorigène est du type 2,3,3,3-tétrafluoropropène, HFO-1234yf ou R-1234yf.

9. Procédé selon l'une des revendications 1 à 8, **caractérisé en ce que** les deuxième et troisième échangeurs de chaleur (2, 3) sont intégrés à une installation de chauffage, ventilation et/ou climatisation comportant un canal (13) de circulation d'un flux d'air (F_{H}) débouchant dans l'habitacle du véhicule et puisant de l'air à l'extérieur du véhicule, ladite installation comportant un volet d'obturation mobile (14) monté dans le canal (13), en aval du troisième échangeur de chaleur (3) et en amont du deuxième échangeur de chaleur (2), dans le sens de circulation du flux d'air (F_{H}), et **en ce que**, dans le premier mode de fonctionnement, le volet (14) est ouvert de manière à ce que le flux d'air (F_{H}) traverse successivement le troisième échangeur de chaleur (3) puis le deuxième échangeur de chaleur (2), et que, dans le deuxième mode de fonctionnement, le volet (14) est fermé de manière à ce que le flux d'air (F_{H}) traverse uniquement le troisième échangeur de chaleur (3) et est détourné du deuxième échangeur de chaleur (2).

## Patentansprüche

1. Verfahren zur Klimatisierung eines Innenraums eines Kraftfahrzeugs mit Hilfe eines Strömungskreislaufs eines Kühlmittels, der mindestens einen ersten Wärmetauscher (1), der einen Verflüssiger und/oder einen Verdampfer bilden kann, einen zweiten Wärmetauscher (2), der einen Verflüssiger bilden kann, einen dritten Wärmetauscher (3), der einen Verdampfer bilden kann, einen Kompressor (5), ein erstes Expansionsventil (D1), ein zweites Expansionsventil (D2) und Einrichtungen (V1, V2, P1 bis P8) aufweist, die das Kühlmittel leiten können, wobei das Verfahren darin besteht, das Kühlmittel gemäß mindestens einer der folgenden Betriebsarten strömen zu lassen:
- einer ersten Betriebsart, bei der das Kühlmittel gemäß einem ersten Kreislauf strömt, indem es mindestens nacheinander den Kompressor (5), den zweiten Wärmetauscher (2), das erste Expansionsventil (D1) und den ersten Wärmetauscher (1) durchquert, der dann einen Verdampfer bildet,
- einer zweiten Betriebsart, bei der das Kühlmittel gemäß einem zweiten Kreislauf strömt, indem es mindestens nacheinander den Kompressor (5), den ersten Wärmetauscher (1), der dann einen Verflüssiger bildet, das zweite Expansionsventil (D2) und den dritten Wärmetauscher (3) durchquert,
**dadurch gekennzeichnet, dass** das erste Expansionsventil (D1) ein nicht gesteuertes Expansionsventil ist, dessen Öffnung, die vom Kühlmittel in der ersten Betriebsart durchquert wird, abhängig vom Eingangsdruck (p_{entrée}) des ersten Expansionsventils (D1) oder abhängig von der Druckdifferenz (Δp) zwischen dem Eintritt und dem Austritt von Kühlmittel im ersten Expansionsventil (D1) variabel ist, wobei der Querschnitt der Öffnung des ersten Expansionsventils (D1) unterhalb eines bestimmten Schwellwerts (ps) des Eingangsdrucks (p_{entrée}) und/oder unterhalb eines bestimmten Schwellwerts (Δps) der Druckdifferenz (Δp) konstant ist, wobei der Querschnitt mit dem Eingangsdruck (p_{entrée}) und/oder mit der Druckdifferenz (Δp) über dem entsprechenden Schwellwert (ps, Δps) zunimmt.

2. Verfahren nach Anspruch 1, **dadurch gekennzeichnet, dass** oberhalb des entsprechenden Schwellwerts (ps, Δps) die Öffnung mit dem Eingangsdruck (p_{entrée}) und/oder mit der Druckdifferenz (Δp) linear zunimmt.

3. Verfahren nach Anspruch 1 oder 2, **dadurch gekennzeichnet, dass** der zweite Wärmetauscher (2) Luft (F_{H}) erwärmt, die in den Innenraum des Fahrzeugs mündet.

4. Verfahren nach Anspruch 1 oder 2, **dadurch gekennzeichnet, dass** der zweite Wärmetauscher (2) Wärme zwischen dem Kühlmittel und einem Wärmeträger eines Sekundärkreises (16) tauscht, der außer dem zweiten Wärmetauscher (2) eine Pumpe (17) und einen vierten Wärmetauscher (4) aufweist, der Wärme zwischen dem Wärmeträger und Luft (F_{H}) austauschen kann, die dazu bestimmt ist, in den Innenraum des Fahrzeugs zu münden.

5. Verfahren nach einem der Ansprüche 1 bis 4, **dadurch gekennzeichnet, dass** das Kühlmittel einen Akkumulator (11) durchquert, der sich im Kühlmittelkreis stromaufwärts vor dem Kompressor (5) befindet.

6. Verfahren nach einem der Ansprüche 1 bis 5, **dadurch gekennzeichnet, dass** das zweite Expansionsventil (2) ein nicht gesteuertes Expansionsventil ist, dessen vom Kühlmittel in der zweiten Betriebsart durchquerte Öffnung abhängig vom Eingangsdruck (Pentree) des zweiten Expansionsventils oder abhängig von der Druckdifferenz (Δp) zwischen dem Eintritt und dem Austritt von Kühlmittel im zweiten Expansionsventil (D2) variabel ist, wobei der Querschnitt des zweiten Expansionsventils (D2) mit dem Eingangsdruck (p_{entrée}) und/oder mit der Druckdifferenz (Δp) zunimmt.

7. Verfahren nach einem der Ansprüche 1 bis 6, **dadurch gekennzeichnet, dass** das Kühlmittel von der Art 1,1,1,2-Tetrafluorethan oder R134A ist.

8. Verfahren nach einem der Ansprüche 1 bis 6, **dadurch gekennzeichnet, dass** das Kühlmittel von der Art 2,3,3,3-Tetrafluorpropen, HFO-1234yf oder R-1234yf ist.

9. Verfahren nach einem der Ansprüche 1 bis 8, **dadurch gekennzeichnet, dass** der zweite und der dritte Wärmetauscher (2, 3) in eine Heizungs-, Lüftungs- und/oder Klimaanlage eingebaut sind, die einen Strömungskanal (13) eines Luftstroms (F_{H}) aufweist, der in den Innenraum des Fahrzeugs mündet und Luft außerhalb des Fahrzeugs schöpft, wobei die Anlage eine bewegliche Verschlussklappe (14) aufweist, die in den Kanal (13) stromabwärts hinter dem dritten Wärmetauscher (3) und stromaufwärts vor dem zweiten Wärmetauscher (2) in Strömungsrichtung des Luftstroms (F_{H}) montiert ist, und dass in der ersten Betriebsart die Klappe (14) offen ist, damit der Luftstrom (F_{H}) nacheinander den dritten Wärmetauscher (3) und dann den zweiten Wärmetauscher (2) durchquert, und dass in der zweiten Betriebsart die Klappe (14) geschlossen ist, damit der Luftstrom (F_{H}) nur den dritten Wärmetauscher (3) durchquert und vom zweiten Wärmetauscher (2) weggelenkt wird.

## Claims

1. Method for the thermal conditioning of a passenger compartment of a motor vehicle with the aid of a refrigerant fluid circulation circuit having at least one first heat exchanger (1) that is able to form a condenser and/or an evaporator, a second heat exchanger (2) that is able to form a condenser, a third heat exchanger (3) that is able to form an evaporator, a compressor (5), a first expansion valve (D1), a second expansion valve (D2), and means (V1, V2, P1 to P8) that are able to direct the refrigerant fluid, said method consisting in causing the fluid to circulate in at least one of the following modes:
- a first operating mode in which the refrigerant fluid circulates in a first loop passing at least successively through the compressor (5), the second heat exchanger (2), the first expansion valve (D1) and the first heat exchanger (1), which then forms an evaporator,
- a second operating mode in which the refrigerant fluid circulates in a second loop passing at least successively through the compressor (5), the first heat exchanger (1), which then forms a condenser, the second expansion valve (D2) and the third heat exchanger (3),
**characterized in that** the first expansion valve (D1) is a non-controlled expansion valve, the opening of which, through which the refrigerant fluid passes in the first operating mode, is variable depending on the inlet pressure (pᵢₙₗₑₜ) of the first expansion valve (D1) or depending on the pressure difference (Δp) between the inlet and the outlet of refrigerant fluid in the first expansion valve (D1), the cross section of the opening of the first expansion valve (D1) being constant below a particular threshold value (ps) of said inlet pressure (pᵢₙₗₑₜ) and/or below a particular threshold value (Δps) of said pressure difference (Δp), said cross section increasing with said inlet pressure (pᵢₙₗₑₜ) and/or with said pressure difference (Δp), above the corresponding threshold value (ps, Δps).

2. Method according to Claim 1, **characterized in that**, above said corresponding threshold value (ps, Δps), said opening increases linearly with said inlet pressure (pᵢₙₗₑₜ) and/or with said pressure difference (Δp).

3. Method according to Claim 1 or 2, **characterized in that** the second heat exchanger (2) heats air (F_{H}) passing into the passenger compartment of the vehicle.

4. Method according to Claim 1 or 2, **characterized in that** the second heat exchanger (2) exchanges heat between said refrigerant fluid and a heat transfer fluid of a secondary circuit (16) that has, besides said second heat exchanger (2), a pump (17) and a fourth heat exchanger (4) that is able to exchange heat between said heat transfer fluid and air (F_{H}) intended to pass into the passenger compartment of the vehicle.

5. Method according to one of Claims 1 to 4, **characterized in that** the refrigerant fluid passes through an accumulator (11) situated upstream of the compressor (5) in said refrigerant fluid circuit.

6. Method according to one of Claims 1 to 5, **characterized in that** the second expansion valve (2) is a non-controlled expansion valve, the opening of which, through which the refrigerant fluid passes in the second operating mode, is variable depending on the inlet pressure (pᵢₙₗₑₜ) of the second expansion valve or depending on the pressure difference (Δp) between the inlet and the outlet of refrigerant fluid in the second expansion valve (D2), the cross section of the opening of the second expansion valve (D2) increasing with said inlet pressure (pᵢₙₗₑₜ) and/or with said pressure difference (Δp).

7. Method according to one of Claims 1 to 6, **characterized in that** the refrigerant fluid is of the 1,1,1,2-tetrafluoroethane or R134A type.

8. Method according to one of Claims 1 to 6, **characterized in that** the refrigerant fluid is of the 2,3,3,3-tetrafluoropropene, HFO-1234yf or R-1234yf type.

9. Method according to one of Claims 1 to 8, **characterized in that** the second and third heat exchangers (2, 3) are incorporated into a heating, ventilation and/or air-conditioning installation having a circulation duct (13) for a flow of air (F_{H}) passing into the passenger compartment of the vehicle and drawing air out of the vehicle, said installation having a movable shut-off flap (14) mounted in the duct (13), downstream of the third heat exchanger (3) and upstream of the second heat exchanger (2) in the direction of circulation of the flow of air (F_{H}), and **in that**, in the first operating mode, the flap (14) is open such that the flow of air (F_{H}) passes successively through the third heat exchanger (3) and then through the second heat exchanger (2), and **in that**, in the second operating mode, the flap (14) is closed such that the flow of air (F_{H}) passes only through the third heat exchanger (3) and is diverted away from the second heat exchanger (2).
